# EUROPEAN PATENT SPECIFICATION

(11) **EP 4 462 383 B1**
(45) Date of publication and mention of the grant of the patent: **26.08.2026**
(21) Application number: 22918973.3
(22) Date of filing: 19.09.2022
(51) Int. Cl.: G06V 20/56, G06F 18/214, G06F 18/2413, G06N 3/045, G06N 3/08, G06N 3/096, G08G 1/042, G06N 3/04, G06N 3/044, G06N 3/084, G06N 20/00, G06N 20/10, G06V 10/82

(54) **ARTIFICIAL INTELLIGENCE-BASED METHOD FOR DETECTING LANE USING SPECTROGRAM PATTERN, AND APPARATUS FOR SAME**
AUF KÜNSTLICHER INTELLIGENZ BASIERENDES VERFAHREN ZUR ERKENNUNG EINER SPUR MIT SPEKTROGRAMMMUSTER UND VORRICHTUNG DAFÜR
PROCÉDÉ BASÉ SUR L'INTELLIGENCE ARTIFICIELLE POUR LA DÉTECTION DE VOIE À L'AIDE D'UN MOTIF DE SPECTROGRAMME, ET APPAREIL ASSOCIÉ

(30) Priority: 04.01.2022 KR 20220001000
(43) Date of publication of application: 13.11.2024
(73) Proprietor: Jeongseok Chemical Corporation, Jeollabuk-do 55323 (KR)
(72) Inventor: KIM, Yong-Hyun, Wanju-gun, Jeollabuk-do 55323 (KR); MA, Young-Gil, Wanju-gun, Jeollabuk-do 55323 (KR); KIM, Dae-Won, Wanju-gun, Jeollabuk-do 55323 (KR)
(74) Representative: Stöckeler, Ferdinand
(86) International application number: PCT/KR2022/013987
(87) International publication number: WO 2023/132436

(56) References cited:
- EP-A1- 4 331 936
- DE-B3- 102019 215 658
- KR-A- 20180 048 407
- KR-A- 20200 120 969
- KR-A- 20200 120 969
- KR-A- 20210 067 364
- KR-A- 20210 158 121
- KR-B1- 102 321 567
- KR-B1- 102 321 567
- US-A1- 2018 157 878
- US-A1- 2018 283 904

## Description

### Technical Field

The present disclosure relates generally to an artificial intelligent (AI)-based method for detecting a lane using a spectrogram pattern, and an apparatus for the method, and more particularly to technology for using AI to accurately detect a signal generated from a lane having an alternating magnetic pattern.

This application claims the benefit of Korean Patent Application No. 10-2022-0001000 filed January 4, 2022.

### Background Art

Unless otherwise indicated herein, what is described in this section is not prior art to the claims in this application and is not admitted to be prior art by inclusion in this section.

A lane on which magnetic paint is applied and magnetic information detected from this lane may be used for traveling of an autonomous vehicle. For example, magnetic paint including ferromagnetic particles is applied on the existing lane, an alternating magnetic field is applied to generate an alternating magnetic pattern in the lane, and then a magnetic sensor embedded in the autonomous vehicle is used to detect the alternating magnetic pattern, whereby information related to vehicle traveling, such as a vehicle speed or lane information, may be notified to a driver or a passenger of an autonomous vehicle.

Here, the information provided in relation to the vehicle traveling may be associated with a magnetic signal composed of a time or frequency of the alternating magnetic pattern corresponding to the magnetic signal, etc.

However, the vibration of a vehicle generated during traveling, or outdoor power transmission lines or the like serves as noise for a signal detected through the magnetic sensor in the vehicle, and thus the vehicle may be hindered from detecting only the magnetic signal generated from the magnetic paint lane to which the alternating magnetic pattern is applied.

KR 102 321 567 B1 relates to a method and apparatus of recognizing driving information by using multiple magnetic sensors.

KR 2020 0120969 A relates to an apparatus and method for determining traveling status of vehicle.

DE 10 2019 215658 B3 relates to a system and method for controlling automated driving functions for an automated vehicle.

US 2018/157878 A1 relates to a method and system for autonomous vehicles.

KR 2021 0158121 A relates to a method and apparatus of recognizing walking information by using multiple magnetic sensors.

### Disclosure

### Technical Problem

An object of the present disclosure is to use a time-frequency based spectrogram pattern generated by performing short-time Fourier transform on a signal in which a lane signal of an alternating magnetic pattern is mixed with noise to train an artificial intelligence (AI) model, and input, to the trained AI model, the spectrogram pattern detected from the lane in real-time to accurately detect the lane signal.

Another object of the present disclosure is to clearly detect the magnetic signal, which is generated from the magnetic paint lane to which the alternating magnetic pattern is applied, to control the vehicle in safety.

A further object of the present disclosure is to, in an autonomous vehicle system configured to use a magnetic signal generated from a magnetic paint lane to travel, remove noise generated due to reasons such as other vehicles, the power transmission lines, the vibration of a vehicle , or the like to make it possible to reduce a malfunction of the autonomous vehicle and operate the vehicle in safety

In addition, technical objects accomplished by the present disclosure are not limited to the above-described objects, and thus other objects should be clearly understood from the following descriptions.

### Technical Solution

The invention is defined by the appended claims. In accordance with an aspect of the present disclosure to accomplish the above objects, there is provided a lane detection method including: generating a time-frequency spectrogram pattern based on a magnetic signal from a magnetic paint lane to which an alternating magnetic pattern is applied; inputting the spectrogram pattern of the magnetic signal detected from the magnetic paint lane in real time to an artificial intelligence (AI) model trained using training data corresponding to the spectrogram pattern; and detecting the magnetic paint lane based on an output value from the AI model.

Here, the real-time magnetic signal may be detected for each preset interval, and a short-time Fourier transform may be used to generate the spectrogram pattern of the magnetic signal detected in real time.

Here, the preset interval may be set in consideration of a braking distance according to a vehicle speed.

Here, the spectrogram pattern may be generated using the magnetic signal filtered based on a high pass filter.

Here, the training data may be generated by labeling the spectrogram pattern for each average vehicle speed.

Here, the AI model may be trained based on a transfer learning algorithm using the training data.

Here, the AI model may correspond to an artificial neural network.

In accordance with another aspect of the present disclosure to accomplish the above objects, there is provided a lane detection apparatus including a processor configured to generate a time-frequency spectrogram pattern based on a magnetic signal corresponding to an alternating magnetic pattern, input the spectrogram pattern detected from a magnetic paint lane in real time to an AI model trained using training data corresponding to the spectrogram pattern, and detect the magnetic paint lane based on an output value from the AI model; and memory configured to store the AI model.

Here, the real-time magnetic signal may be detected for each preset interval, and short-time Fourier transform may be used to generate the spectrogram pattern of the magnetic signal detected in real time.

Here, the preset interval may be set in consideration of a braking distance according to a vehicle speed.

Here, the spectrogram pattern may be generated using the magnetic signal filtered based on a high pass filter.

Here, the training data may be generated by labeling the spectrogram pattern for each average vehicle speed.

Here, the AI model may be trained based on a transfer learning algorithm using the training data.

Here, the AI model may correspond to an artificial neural network.

### Advantageous Effects

In accordance with the present disclosure having the above configuration, the time-frequency based spectrogram pattern generated by performing the short-time Fourier transform on a signal in which the lane signal of an alternating magnetic pattern is mixed with noise may be used to train the artificial intelligence (AI) model, and the spectrogram pattern detected from the lane in real-time may be input to the trained AI model to accurately detect the lane signal.

In addition, the present disclosure may clearly detect the magnetic signal, which is generated from the magnetic paint lane to which the alternating magnetic pattern is applied, to control the vehicle safely.

Furthermore, in the autonomous vehicle system configured to use the magnetic signal generated from the magnetic paint lane to travel, the present disclosure may remove noise generated due to reasons such as other vehicles, the power transmission lines, the vibration of the autonomous vehicle, or the like to make it possible to reduce a malfunction of the autonomous vehicle and operate the same in safety.

Effects of the present embodiments are not limited to those described above and other issues unmentioned above will be clearly understood by those skilled in the art from the description of the claims.

### Description of Drawings

FIG. 1 is a conceptual diagram illustrating an artificial intelligent (AI)-based process for detecting a lane using a spectrogram pattern according to an embodiment of the present disclosure;
FIG. 2 is an operational flowchart illustrating an AI-based method for detecting a lane using a spectrogram pattern according to an embodiment of the present disclosure;
FIGS. 3 to 5 are diagrams illustrating examples of a spectrogram analysis result and a power spectrum density based on a detected frequency component while a vehicle travels at 50 Km/h on a magnetic paint lane to which an alternating magnetic pattern is applied at a spatial interval of 10 cm;
FIG. 6 is a diagram illustrating a magnetic signal detected for each speed of a vehicle as a spectrogram pattern according to an embodiment of the present disclosure;
FIGS. 7 and 8 are diagrams illustrating examples of results in which a supervised-learning performed deep convolutional neural network recognizes a test pattern for each of four speeds illustrated in FIG. 6 according to the present disclosure; and
FIG. 9 is a block diagram illustrating an AI-based apparatus for detecting a lane using a spectrogram pattern according to an embodiment of the present disclosure.

### Best Mode

An AI-based process for detecting a lane using a spectrogram pattern according to an embodiment may be classified into a process for using a spectrogram pattern 101 for training to train an AI model 110 and a process for using an output value of a trained AI model 120 to detect a lane from a magnetic signal detected in real time.

First, the AI model 110 used in the present disclosure corresponds to an artificial neural network, for example, a deep neural network (DNN) model or a convolutional neural network (CNN).

Here, the spectrogram pattern 101 for training may be provided as training data for training the AI model 110.

For example, the spectrogram pattern 101 for training may correspond to a spectrogram pattern generated in correspondence to a magnetic signal detected from a magnetic paint lane by a vehicle while the vehicle travels at various speeds. Therefore, the spectrogram pattern 101 for training may be collected at various vehicle speeds.

The trained AI model 120 in this way may receive the spectrogram pattern 103 for the magnetic signal 102 detected in real time by the traveling vehicle to output a detected result value for the magnetic paint lane on which the vehicle travels.

In other words, when the magnetic signal 102, detected while the vehicle travels, is short-time Fourier-transformed to generate the spectrogram pattern 103, and the spectrogram pattern is input to the trained AI model 120, the trained AI model 120 may analyze the spectrogram pattern (103) to provide a predicted vehicle speed and lane information.

In this way, the magnetic paint lane is detected through the spectrogram pattern and related information are provided, and thus the lane may be clearly detected even in a state where noise is included in a magnetic signal detected by the vehicle.

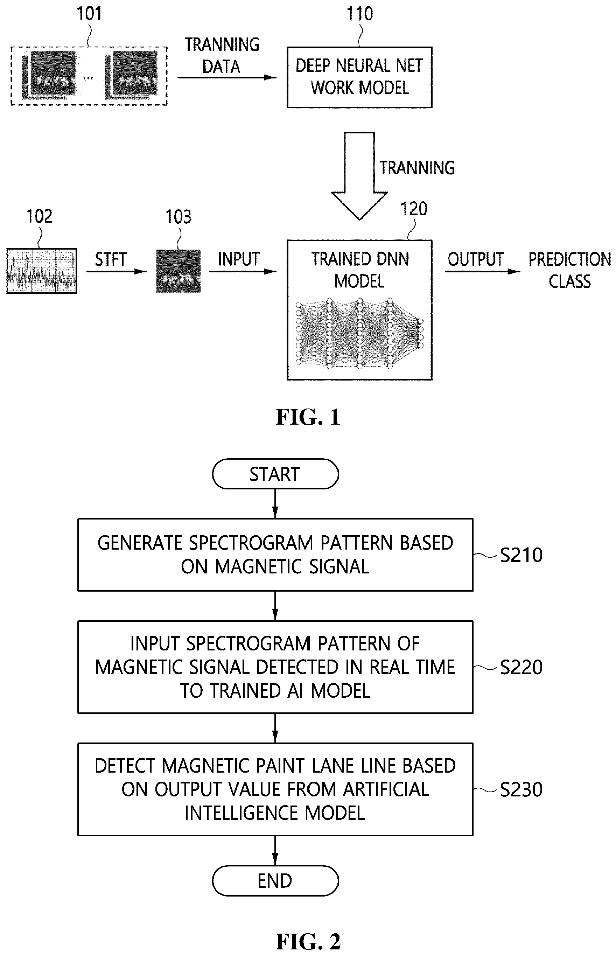

FIG. 2 is an operational flowchart illustrating an AI-based method for detecting a lane using a spectrogram pattern according to an embodiment of the present disclosure.

Referring to FIG. 2, the AI-based method for detecting a lane using a spectrogram pattern according to an embodiment of the present disclosure involves generating a time-frequency spectrogram pattern based on the magnetic signal of the magnetic paint lane to which an alternating magnetic pattern is applied (step S210).

Here, the magnetic signal may be acquired through the magnetic sensor embedded in the vehicle.

Here, the magnetic paint lane may be generated by applying an alternating magnetic pattern so that the magnetic paint lane has a certain spatial interval. Such a spatial interval of the magnetic paint lane may affect the magnetic signal acquired while the autonomous vehicle travels.

For example, when a travel distance S (units of cm) for one second according to the vehicle speed (v) is calculated, and the travel distance for one second is divided by the spatial interval (units of cm) of the magnetic paint lane, the number of times of magnetic alternating pattern for which the vehicle detects during traveling for one second may be counted. Here, the counted number of times of the magnetic alternating pattern may correspond to the frequency (fv) that should be detected by the vehicle. In this way, a process for calculating the frequency (fv) may be expressed as Equation 1.${f}_{ν} = \frac{s}{spatial interval} = ν \times \frac{1}{3.6} \times \frac{100}{spatial interval}$

In other words, the frequency that should be detected by the vehicle changes according to the spatial interval of the magnetic paint lane, which may significantly affect the control of the traveling vehicle.

Here, power noise (60 Hz in Korea) generated due to nearby vehicles or power supply lines and noise generated from the vibration of the vehicle itself or generated from the vibration of the vehicle due to the roughness of a road surface may be considered.

Typically the vibration noise of the vehicle generated from the vehicle itself or the roughness of a road surface is measured at about 30 Hz or lower. In addition, while the vehicle travels, the noise may be generated from nearby vehicles. However, considering the minimum speed limit and the maximum speed limit on the road, typically the relative speed between vehicles is not over 50 Km/h. Furthermore, the power noise is detected at 60 Hz in Korea, and this value may be detected as constant regardless of the vehicle speed. Harmonics (frequencies of integer multiples of the fundamental wave) of such various types of noise may also act as noise, but the magnitude of the harmonics may not be greater than that of the fundamental frequency.

In this way, the frequencies of the noise generated due to various sources do not significantly change even when the vehicle accelerates and decelerates, but the frequency, which should be detected in correspondence to the alternating magnetic pattern, changes in proportional to the vehicle speed.

For example, when comparing frequency components detected in a state of a vehicle parked with in a state of a vehicle traveling at 50 Km, the actually detected noise changes only in the magnitude but the value of the frequency itself does not change significantly.

In consideration of such a feature, a frequency band pass filter is typically used to remove a noise component.

However, a method for using the band pass filter to remove the noise component is highly likely to provide wrong information due to the harmonics caused by the power noise generated by the vibrations of the vehicle, nearby vehicles, or power supply lines, and noise due to frequencies generated by interference from them. Accordingly, the present disclosure intends to propose a solution using a spectrogram pattern for detecting a lane signal more clearly even in a state where such noise is present.

Here, the spectrogram pattern may be generated using a magnetic signal filtered based on a high pass filter.

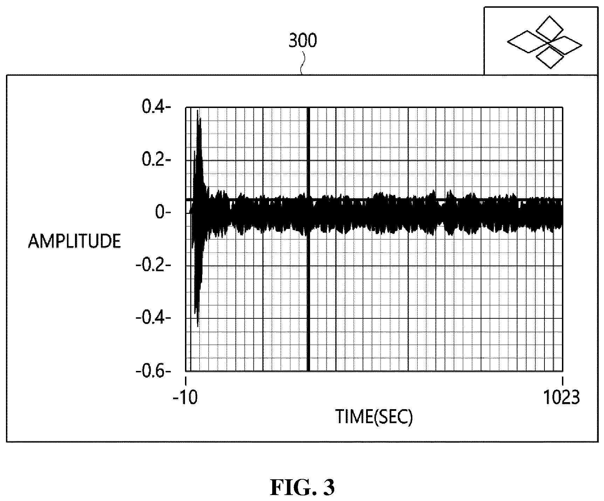

For example, FIGS. 3 to 5 are diagrams illustrating examples of a spectrogram analysis result and a power spectrum density based on a detected frequency component while a vehicle travels at 50 Km/h on a magnetic paint lane to which an alternating magnetic pattern is applied at a spatial interval of 10 cm.

First, the graph illustrated in FIG. 3 illustrates a result 300 obtained by filtering a frequency component using a 80 Hz high frequency pass filter, when an alternating magnetic pattern is applied such that the magnetic paint lane has a spatial interval of 10 cm, and the vehicle detects the frequency component while traveling at 50 Km/h. In other words, the signal illustrated in the graph in FIG. 3 is a magnetic signal in time, which is obtained by removing 80 Hz high-pass filtered signal from an original signal detected from the magnetic paint lane.

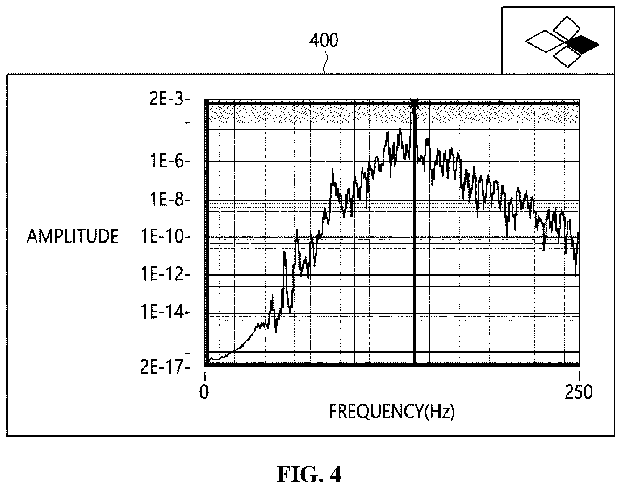

Here, the magnetic signal illustrated in FIG. 3 is filtered again using a 132-153 Hz bandpass filter and then the result signal is analyzed by the power spectrum density. As a result, a frequency of about 140 Hz is detected as illustrated in FIG. 4.

However, as described above, it is highly possible that such a frequency analysis method may provide wrong information due to the harmonics caused by the power noise generated by the vibration of the vehicle, the nearby vehicles, or the power supply lines, and noise due to frequencies generated by interference from them.

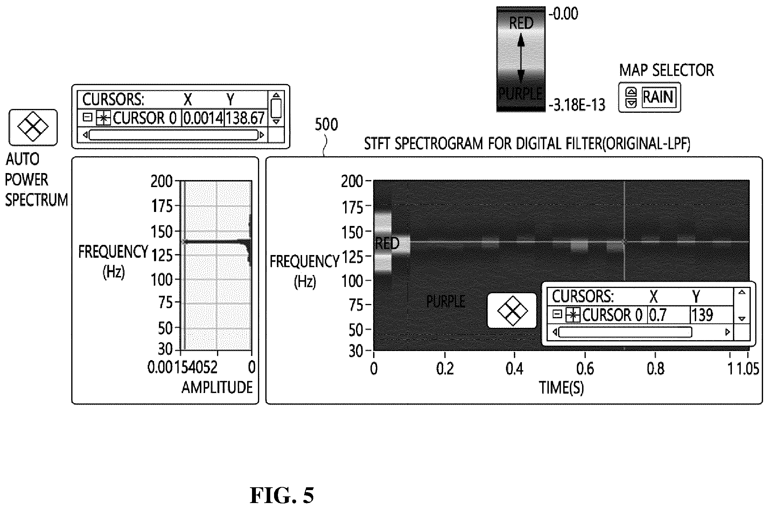

Accordingly, in the present disclosure, spectrogram analysis as illustrated in FIG. 5 may be performed to intuitively show a frequency desired to detect.

FIG. 5 is a diagram illustrating a spectrogram analysis result 500 for the magnetic signal illustrated in FIG. 3.

For example, the spectrogram analysis result 500 illustrated in FIG. 5 may be a time-frequency spectrogram obtained by performing short-time Fourier transform on the magnetic signal and representing the short-time Fourier transformed result as the time-frequency spectrogram.

Here, the spectrogram illustrated in FIG. 5 may correspond to a result acquired by setting a frequency bin to 512 for every 50 ms and the size of a Hanning window to 64.

Here, the color of the spectrogram indicates the signal intensity in time and frequency, and it may be intuitively found that the closer to red the color is, the stronger the signal is. In other words, referring to the spectrum analysis result 500 illustrated in FIG. 5, it may be found that a strong signal is generated at about 140 Hz every 50 ms, and the surrounding noise also appears. It may be found that such a result matches the power spectrum density analysis result illustrated in FIG. 4.

However, even when comparing FIGS. 4 and 5, it may be clearly found that the spectrogram analysis result in FIG. 5 more intuitively represents the frequency desired to detect in comparison to the power spectrum density analysis result in FIG. 5.

In addition, the AI-based method for detecting a lane using a spectrogram pattern according to an embodiment of the present disclosure involves inputting the spectrogram pattern of a magnetic signal detected from a magnetic paint lane in real time to a trained AI model using training data corresponding to the spectrogram pattern (step S220).

Here, the training data may be generated by labeling the spectrogram pattern for each average speed.

Here, the AI model may be trained based on a transfer learning algorithm using the training data.

Here, the AI model may correspond to an artificial neural network.

Here, the real-time magnetic signal is detected for each preset interval, and short-time Fourier transform is performed to generate the spectrogram pattern of a magnetic signal detected in real time.

For example, spectrogram patterns for using as the training data according to an embodiment of the present disclosure may be generated based on a series of magnetic signals acquired from the magnetic paint lane while the vehicle travels.

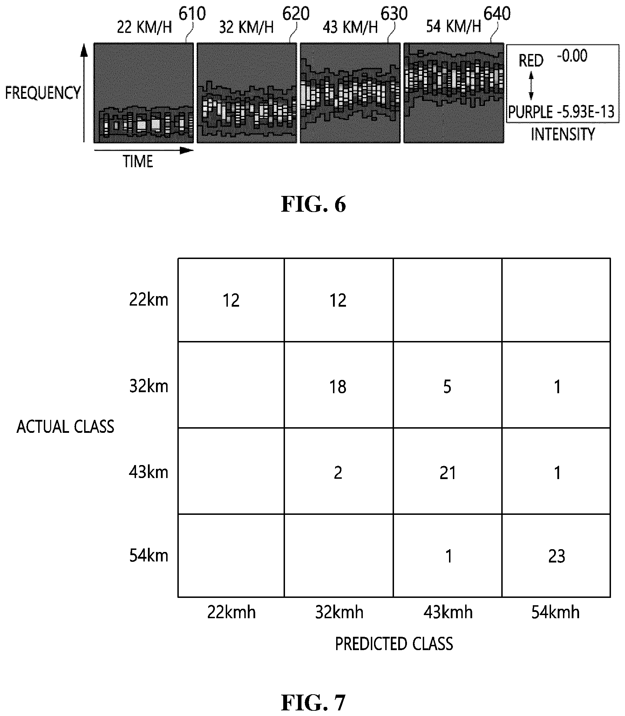

FIG. 6 shows a JPG file transformed from the spectrogram pattern for each average vehicle speed. Comparing the spectrogram patterns 610 to 640 illustrated in FIG. 6, it may be found that as the speed increases, by about 10 Km/h, from 22 Km/h, 32 Km/h, 43 Km/h, and to 54 Km/h, the magnitude of a frequency having a strong intensity also increases. Accordingly, it may be found that the shapes of the pattern are different for each average vehicle speed.

Here, in the present disclosure, the AI model may be trained in a form in which a portion of the transfer training algorithm is modified, and, to this end, the training may be performed with the plurality of spectrogram patterns 610 to 640 measured at different average speeds as in FIG. 6.

For example, each of 60 spectrograms corresponding to 22 Km/h, 60 spectrograms corresponding to 32 Km/h, 60 spectrograms corresponding to 43 Km/h, and 60 spectrograms corresponding to 54 Km/h are input to the AI model to train the same.

Then, a separate test spectrogram pattern is input to the AI model to examine a recognition rate of the same. For example, since frequencies acquired from the magnetic paint lane are related to the vehicle speed, an experiment may be performed in which test spectrogram patterns labeled for each speed may be input to the AI model to identify the vehicle speed.

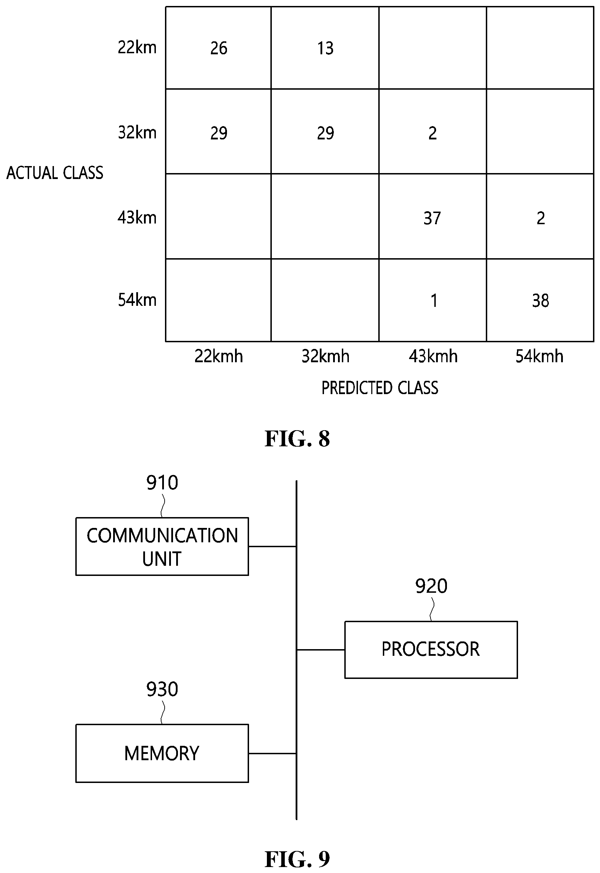

For example, FIGS. 7 and 8 are diagrams illustrating examples of results in which a supervised-learning performed deep convolutional neural network recognizes test patterns for each of the four speeds illustrated in FIG. 6 according to the present disclosure.

First, FIG. 7 represents a recognized result obtained by inputting 25 test spectrogram patterns for each speed are input to a trained-deep convolutional neural network.

Referring to FIG. 7, a recognition accuracy of the AI model (deep convolutional neural network) appears to be about 77.1%, and thus it may be found that as the speed becomes higher, the accuracy increases.

Here, for the AI model, as the number of samples for training increases, the accuracy increases, and thus the accuracy may be significantly improved.

To this end, it was examined how much the accuracy increases by preparing 30 more spectrogram patterns for each of the same speeds as illustrated in FIG. 6, further training the AI model, and inputting 40 test spectrogram patterns for each of the speeds to the further trained AI model.

Referring to FIG. 8, the recognition accuracy of the AI model (deep convolutional neural network) appears to be about 83.3%, and it may be also found as in FIG. 7 that as the speed becomes higher, the accuracy increases.

In this way, for the AI model, as the number of training samples, namely, the number of training spectrogram patterns increases, the accuracy becomes higher and may be greatly improved to maximum 99%.

Accordingly, for the autonomous vehicle using information about the magnetic paint lane to which the alternating magnetic pattern is applied, it may be preferable to obtain information about the magnetic paint lane in a manner of changing the magnetic signal acquired from the magnetic paint lane to a pattern in the form of spectrogram and recognizing the pattern, than to detect the lane through a typical technology.

Here, the vehicle speed may be acquired based on information fed back from at least one of a speedometer and a GPS sensor embedded in the vehicle.

For example, the vehicle speed may be acquired in correspondence to a value output from the speedometer in the vehicle.

For another example, the location of the vehicle acquired through the GPS sensor is used to calculate a traveling distance of the vehicle, and the vehicle speed may be computed based on the time and the traveling distance.

Here, the preset interval may be set in consideration of the braking distance according to the vehicle speed.

For example, since the vehicle speed varies every hour, it may be preferable to perform the short-time Fourier transform in consideration of the vehicle speed and the traveling speed of the vehicle according to the braking distance.

Accordingly, determining a time interval in which the short-time Fourier transform is performed may correspond to an important factor to prevent a vehicle accident so that the frequency analysis is performed within the traveling distance of the vehicle including the braking distance.

Here, the emergency braking distance (the distance that the vehicle travels after the wheels stop) of the vehicle may calculated as Equation 2.$Emrgencey braking distance = \frac{speed \left(Km/h\right)}{10} \times \frac{speed \left(Km/h\right)}{10} \times \frac{1}{2}$

For example, when the vehicle travels at 30 Km/h, the vehicle travels 8 m for one second. Here, according to [expression 2], the emergency braking distance is computed to be 4.5 m, but may be differed due to the road surface and the surrounding environment. Accordingly, for safe traveling, the frequency analysis for the short-time Fourier transform should be performed before the vehicle travels 3.5m for one second, and thus the time interval in which the short-time Fourier transform is performed may be set to 0.4 seconds or less.

However, since an actual braking distance is known to be twice longer than the emergency braking distance, the time interval in which the short-time Fourier transform is performed may be set to 0.2 seconds or less to lower a risk that an accident occurs during the emergency braking of the vehicle.

Actually, when the time interval in which the short-time Fourier transform is performed is set to 0.05 seconds, the frequency analysis for the short-time Fourier transform is performed every time the vehicle travels 0.4 m and thus the safety of the vehicle may be greatly improved.

However, when the time interval in which the short-time Fourier transform is performed is set to several milliseconds (ms), data (bin) for the Fourier transform may not be sufficient to make it difficult to accurately perform frequency analysis and thus the time interval may be set in a range in which data for Fourier transform is acquired well.

In addition, the AI-based method for detecting a lane using a spectrogram pattern according to an embodiment of the present disclosure involves, detecting the magnetic paint lane based on the output value of the AI model (step S230).

Here, the vehicle speed or lane information may be detected through the output value of the AI model.

Furthermore, although not illustrated in FIG. 2, the AI-based method for detecting a lane using a spectrogram pattern according to an embodiment of the present disclosure may involve controlling the operation of the vehicle based on the detected lane.

Through such an AI-based method for detecting a lane using a spectrogram pattern, a time-frequency based spectrogram pattern generated by performing short-time Fourier transform on a signal in which a lane signal of an alternating magnetic pattern is mixed with noise may be used to train an AI model, and the spectrogram pattern detected from the lane in real-time may be input to the trained AI model to accurately detect the lane signal.

In addition, the present disclosure may control the vehicle in safety by clearly detecting the magnetic signal generated from the magnetic paint lane to which the alternating magnetic pattern is applied.

Furthermore, in the autonomous vehicle system for using the magnetic signal generated from the magnetic paint lane to travel, the present disclosure may remove noise generated due to sources such as other vehicles, the power transmission lines, the vibration of the vehicle, or the like to make it possible to reduce a malfunction of the autonomous vehicle and operate the vehicle in safety.

FIG. 9 is a block diagram of an AI-based apparatus for detecting a lane using a spectrogram pattern according to an embodiment of the present disclosure.

Here, the lane detection apparatus based on AI using a spectrogram pattern may interact with a magnetic sensor embedded in a vehicle or operate with the magnetic sensor included therein.

Referring to FIG. 9, the AI-based apparatus for detecting a lane using a spectrogram pattern may include a communication unit 910, a processor 920, and a memory 930.

The communication unit 910 may serve to transmit and receive information required for lane detection based on AI using a spectrogram pattern over a communication network such as a network. Here, the network is to provide a pathway for transferring data between apparatuses, and is a concept covering networks that have been used and networks that may be developed in the future.

For example, the network may be an IP network for providing a transmission and reception service of mass data and a seamless data service through the Internet Protocol (IP), an all IP network that is an IP network structure in which different networks are integrated based on IP, or the like. In addition, the network may be composed by combining one or more of a wired network, a Wireless Broadband (WiBro) network, a third-generation wireless network including WCDMA, a 3.5 generation wireless communication network including network High Speed Downlink Packet Access (HSDPA) network, a fourth generation wireless communication network including LTE network, a satellite communication network, and a Wi-Fi network.

In addition, a network may be any one or a combination of two or more of a wired and wireless short-range communication network, a mobile communication network providing communication between mobile bodies and a mobile body and the outside of the mobile body, a satellite communication network providing communication between earth stations using a satellite, or a wired and wireless communication network. Meanwhile, the standard transmission method of the network is not limited to the existing standard transmission method, but may include all standard transmission methods to be developed in the future.

The processor 920 generates a time-frequency spectrogram pattern based on a magnetic signal from a magnetic paint lane to which an alternating magnetic pattern is applied.

Here, the spectrogram pattern may be generated using a magnetic signal filtered based on a high pass filter.

In addition, the processor 920 inputs the spectrogram pattern of the magnetic signal detected from the magnetic paint lane in real time to an AI model trained using training data corresponding to the spectrogram pattern.

Here, the real-time magnetic signal is detected for each preset period, and short-time Fourier transform is performed to generate the spectrogram pattern of the magnetic signal detected in real time.

Here, the present period may be set in consideration of the braking distance according to the vehicle speed.

Here, the training data may be generated by labeling the spectrogram pattern for each average speed.

Here, the AI model may be trained based on a transfer learning algorithm using the training data.

Here, the AI model may correspond to an artificial neural network.

In addition, the processor 920 detects the magnetic paint lane based on an output value of the AI model.

In addition, as described above, the memory 930 stores various pieces of information generated from the AI-based apparatus for detecting a lane using a spectrogram pattern according to an embodiment of the present disclosure.

According to embodiments, the memory 930 may be configured regardless of the lane detection apparatus to support a function for lane detection. Here, the memory 930 may operate as a separate large capacity storage, or include a control function for performing operations.

Meanwhile, the lane detection apparatus has the memory mounted thereon. For an implementation example, the memory is a computer-readable medium. For an implementation example, the memory may be a volatile memory unit, and for another embodiment, the memory may be a non-volatile memory unit. For another implementation example, the memory may be a cloud storage apparatus connected through communication. For an implementation example, the storage apparatus is a computer-readable medium. In various different implementation examples, the storage apparatus may include, for example, a hard disk apparatus, an optical disc apparatus or any other mass storage apparatus.

Through such an AI-based method for detecting a lane using a spectrogram pattern, a time-frequency-based spectrogram pattern generated by performing short-time Fourier transform on a signal in which a lane signal of an alternating magnetic pattern is mixed with noise may be used to train an AI model, and the spectrogram pattern detected from the lane in real-time may be input to the trained AI model to accurately detect the lane signal.

In addition, the present disclosure may control the vehicle in safety by clearly detecting the magnetic signal generated from the magnetic paint lane to which the alternating magnetic pattern is applied.

Furthermore, in an autonomous vehicle system for using the magnetic signal generated from the magnetic paint lane to travel, the present disclosure may remove noise generated due to sources such as other vehicles, the power transmission lines, the vibration of the vehicle, or the like to make it possible to reduce a malfunction of the autonomous vehicle and operate the vehicle in safety.

As described above, in the AI-based apparatus for detecting a lane using a spectrogram pattern and an apparatus using the method according to the present disclosure, the configurations and schemes in the above-described embodiments are not limitedly applied, and some or all of the above embodiments can be selectively combined and configured so that various modifications are possible, provided that these are within the scope of the appended claims.

## Claims

1. A lane detection method comprising:
generating a time-frequency spectrogram pattern based on a magnetic signal from a magnetic paint lane to which an alternating magnetic pattern is applied;
inputting the spectrogram pattern of the magnetic signal detected from the magnetic paint lane in real time to an artificial intelligence (AI) model trained using training data corresponding to the spectrogram pattern; and
detecting the magnetic paint lane based on an output value from the AI model,
wherein the real-time magnetic signal is detected for each preset interval, and a short-time Fourier transform is performed to generate the spectrogram pattern of the magnetic signal detected in real time,
wherein the preset interval is set in consideration of a braking distance according to a vehicle speed.

2. The lane detection method of claim 1, wherein the spectrogram pattern is generated using a magnetic signal filtered based on a high pass filter.

3. The lane detection method of claim 1, wherein the training data is generated by labeling the spectrogram pattern for each average vehicle speed.

4. The lane detection method of claim 3, wherein the AI model is trained based on a transfer learning algorithm using the training data.

5. The lane detection method of claim 1, wherein the AI model corresponds to an artificial neural network.

6. A lane detection apparatus, comprising:
a processor configured to generate a time-frequency spectrogram pattern based on a magnetic signal corresponding to an alternating magnetic pattern, input the spectrogram pattern detected from a magnetic paint lane in real time to an AI model trained using training data corresponding to the spectrogram pattern, and detect the magnetic paint lane based on an output value from the AI model; and
a memory configured to store the AI model,
wherein the real-time magnetic signal is detected for each preset interval, and a short-time Fourier transform is performed to generate the spectrogram pattern of the magnetic signal detected in real time,
wherein the preset interval is set in consideration of a braking distance according to a vehicle speed.

7. The lane detection apparatus of claim 6, wherein the spectrogram pattern is generated using a magnetic signal filtered based on a high pass filter.

8. The lane detection apparatus of claim 6, wherein the training data is generated by labeling the spectrogram pattern for each average vehicle speed.

9. The lane detection apparatus of claim 8, wherein the AI model is trained based on a transfer learning algorithm using the training data.

10. The lane detection apparatus of claim 6, wherein the AI model corresponds to an artificial neural network.

## Patentansprüche

1. Ein Spurerfassungsverfahren, das folgende Schritte aufweist:
Erzeugen eines Zeit-Frequenz-Spektrogrammmusters basierend auf einem magnetischen Signal von einer Magnetfarbspur, auf die ein wechselndes Magnetmuster aufgebracht ist;
Eingeben des Spektrogrammmusters des magnetischen Signals, das von der Magnetfarbspur in Echtzeit erfasst wird, in ein Künstliche-Intellligenz(Kl)-Modell, das unter Verwendung von Trainingsdaten trainiert wird, die dem Spektrogrammmuster entsprechen; und
Erfassen der Magnetfarbspur basierend auf einem Ausgabewert von dem KI-Modell,
wobei das magnetische Echtzeit-Signal für jedes voreingestellte Intervall erfasst wird und eine Kurzzeit-Fourier-Transformation durchgeführt wird, um das Spektrogrammmuster des magnetischen Signals zu erzeugen, das in Echtzeit erfasst wird,
wobei das voreingestellte Intervall unter Berücksichtigung eines Bremsabstands gemäß einer Fahrzeuggeschwindigkeit eingestellt ist.

2. Das Spurerfassungsverfahren gemäß Anspruch 1, wobei das Spektrogrammmuster unter Verwendung eines magnetischen Signals erzeugt wird, das basierend auf einem Hochpassfilter gefiltert wird.

3. Das Spurerfassungsverfahren gemäß Anspruch 1, wobei die Trainingsdaten durch Kennzeichnen des Spektrogrammmusters für jede durchschnittliche Fahrzeuggeschwindigkeit erzeugt werden.

4. Das Spurerfassungsverfahren gemäß Anspruch 3, wobei das KI-Modell basierend auf einem Transferlernalgorithmus unter Verwendung der Trainingsdaten trainiert wird.

5. Das Spurerfassungsverfahren gemäß Anspruch 1, wobei das KI-Modell einem künstlichen neuronalen Netzwerk entspricht.

6. Eine Spurerfassungsvorrichtung, die folgende Merkmale aufweist:
einen Prozessor, der dazu konfiguriert ist, ein Zeit-Frequenz-Spektrogrammmuster basierend auf einem magnetischen Signal zu erzeugen, das einem wechselnden Magnetmuster entspricht, das Spektrogrammmuster, das von einer Magnetfarbspur in Echtzeit erfasst wird, in ein KI-Modell einzugeben, das unter Verwendung von Trainingsdaten trainiert wird, die dem Spektrogrammmuster entsprechen, und die Magnetfarbspur basierend auf einem Ausgabewert von dem KI-Modell zu erfassen; und
einen Speicher, der dazu konfiguriert ist, das KI-Modell zu speichern,
wobei das magnetische Echtzeit-Signal für jedes voreingestellte Intervall erfasst wird und eine Kurzzeit-Fourier-Transformation durchgeführt wird, um das Spektrogrammmuster des magnetischen Signals zu erzeugen, das in Echtzeit erfasst wird,
wobei das voreingestellte Intervall unter Berücksichtigung eines Bremsabstands gemäß einer Fahrzeuggeschwindigkeit eingestellt ist.

7. Die Spurerfassungsvorrichtung gemäß Anspruch 6, wobei das Spektrogrammmuster unter Verwendung eines magnetischen Signals erzeugt wird, das basierend auf einem Hochpassfilter gefiltert wird.

8. Die Spurerfassungsvorrichtung gemäß Anspruch 6, wobei die Trainingsdaten durch Kennzeichnen des Spektrogrammmusters für jede durchschnittliche Fahrzeuggeschwindigkeit erzeugt werden.

9. Die Spurerfassungsvorrichtung gemäß Anspruch 8, wobei das KI-Modell basierend auf einem Transferlernalgorithmus unter Verwendung der Trainingsdaten trainiert wird.

10. Die Spurerfassungsvorrichtung gemäß Anspruch 6, wobei das KI-Modell einem künstlichen neuronalen Netzwerk entspricht.

## Revendications

1. Procédé de détection de voie comprenant :
la génération d'un spectrogramme temps-fréquence sur la base d'un signal magnétique provenant d'une voie de peinture magnétique à laquelle est appliqué un motif magnétique alternatif ;
l'introduction en temps réel du motif de spectrogramme du signal magnétique détecté de la voie de peinture magnétique dans un modèle d'intelligence artificielle (IA) entraîné en utilisant des données d'apprentissage correspondant à ce motif de spectrogramme ; et
la détection de la voie de peinture magnétique à partir d'une valeur de sortie du modèle d'IA,
dans lequel le signal magnétique en temps réel est détecté pour chaque intervalle prédéfini, et une transformée de Fourier à court terme est effectuée pour générer le motif de spectrogramme du signal magnétique détecté en temps réel,
dans lequel l'intervalle prédéfini est déterminé en tenant compte de la distance de freinage selon la vitesse du véhicule.

2. Procédé de détection de voie selon la revendication 1, dans lequel le motif de spectrogramme est généré en utilisant un signal magnétique filtré sur la base d'un filtre passe-haut.

3. Procédé de détection de voie selon la revendication 1, dans lequel les données d'apprentissage sont générées en attribuant une étiquette au motif de spectrogramme correspondant à chaque vitesse moyenne du véhicule.

4. Procédé de détection de voie selon la revendication 3, dans lequel le modèle d'IA est entraîné sur la base d'un algorithme d'apprentissage par transfert en utilisant les données d'entraînement.

5. Procédé de détection de voie selon la revendication 1, dans lequel le modèle d'IA correspond à un réseau neuronal artificiel.

6. Appareil de détection de voie, comprenant :
un processeur configuré pour générer un motif de spectrogramme temps-fréquence sur la base d'un signal magnétique correspondant à un motif magnétique alternatif, introduire en temps réel le motif de spectrogramme détecté à partir d'une voie de peinture magnétique dans un modèle d'IA entraîné en utilisant les données d'entraînement correspondant au motif de spectrogramme, et pour détecter la voie de peinture magnétique sur la base d'une valeur de sortie du modèle d'IA ; et
une mémoire conçue pour stocker le modèle d'IA,
dans lequel le signal magnétique en temps réel est détecté pour chaque intervalle prédéfini, et une transformée de Fourier à court terme est effectuée pour générer le motif de spectrogramme du signal magnétique détecté en temps réel,
dans lequel l'intervalle prédéfini est déterminé en tenant compte de la distance de freinage selon la vitesse du véhicule.

7. Appareil de détection de voie selon la revendication 6, dans lequel le motif de spectrogramme est généré en utilisant un signal magnétique filtré sur la base d'un filtre passe-haut.

8. Appareil de détection de voie selon la revendication 6, dans lequel les données d'apprentissage sont générées en attribuant une étiquette au motif de spectrogramme correspondant à chaque vitesse moyenne du véhicule.

9. Appareil de détection de voie selon la revendication 8, dans lequel le modèle d'IA est entraîné sur la base d'un algorithme d'apprentissage par transfert en utilisant les données d'entraînement.

10. Appareil de détection de voie selon la revendication 6, dans lequel le modèle d'IA correspond à un réseau neuronal artificiel.
